# EUROPÄISCHE PATENTANMELDUNG

(11) **EP 1 507 021 A1**
(43) Veröffentlichungstag der Anmeldung: **16.02.2005**
(21) Anmeldenummer: 04015009.6
(22) Anmeldetag: 25.06.2004
(51) Int. Cl.: C23C 4/12, C23C 4/08, H01R 39/36

(54) **Verfahren zum metallischen Beschichten von Graphitscheiben oder -blöcken sowie entsprechende Erzeugnisse**

(30) Priorität: 15.08.2003 DE 20312825 U; 15.08.2003 DE 10338148
(71) Anmelder: DEUTSCHE CARBONE AG, 60437 Frankfurt (DE)
(72) Erfinder: Latz, Wilhelm, 60439 Frankfurt/Main (DE)
(74) Vertreter: Schubert, Siegmar, Dipl.-Ing.

(57) **Zusammenfassung**

Ein metallisches Beschichten von Graphitscheiben oder -blöcken, insbesondere Kohlebürsten elektrischer Maschinen, mit wenigstens einem Metall insbesondere aus der Gruppe Kupfer und Zinn, soll umweltfreundlich so erfolgen, daß eine hochmetallische Schicht zuverlässig an der Graphitscheibe haftet. Hierzu wird das Metall auf eine Oberfläche der Graphitscheibe oder des Graphitblocks thermisch aufgespritzt.

## Beschreibung

Die Erfindung betrifft ein Verfahren zum metallischen Beschichten von Graphitscheiben oder -blöcken, insbesondere Kohlebürsten elektrischer Maschinen, nach dem Oberbegriff des Anspruchs 1.

Dementsprechend betrifft die Erfindung auch eine metallisch beschichtete Graphitscheibe oder beschichteten Graphitblock insbesondere für eine Kohlebürste elektrischer Maschinen. Es besteht häufig der Wunsch, Graphitscheiben bzw. Graphitblöcke gut elektrisch leitend bzw. wärmeleitend mit einem metallischen Grundkörper zu verbinden. Solche Verbindungen oder Befestigungen werden nach dem Stand der Technik in der Regel durch Löten hergestellt. Um eine Verankerung des Lots im Graphitmaterial zu erreichen, muß jedoch die Graphitoberfläche aufwendig vorbehandelt werden.

Zur Verbesserung dieser Technik ist es bereits bekannt, die Graphitscheibe oder den Graphitblock mit einer metallischen Schicht auszustatten, die einfach und zuverlässig mit dem metallischen Grundkörper verlötet werden kann.

Zu diesem Zweck ist es bekannt, einen sogenannten grünen Preßling aus einem hochgraphithaltigen Werkstoff, der ein aushärtbares Duroplast oder ein Thermoplast als Binder enthält, mit einer hochmetallhaltigen Schicht zu verpressen (DE 198 56 503 C1). In der Regel wird der grüne Preßling, der mit seiner hochmetallhaltigen Schicht auf dem metallischen Grundkörper aufgebracht ist, mit diesem zusammen gesintert. Dadurch härtet der Kunststoffanteil des Duroplasts in dem Formkörper aus bzw. verklebt das Thermoplast, womit ein fester mechanisch widerstandsfähiger Formkörper mit dem metallischen Grundkörper ohne herkömmliches Löten, infolge einer Fusion fest verbunden ist.

Zur Fertigungsvereinfachung ist eine Variante des voranstehenden Verfahrens besonders günstig, bei der der Formkörper ohne metallische Körper an/in der Schicht aus hochmetallhaltigem Werkstoff geformt und gesintert ist. Nach diesem Verfahren kann ein Thermoplast als Bindemittel in dem hochgraphithaltigen Werkstoff bei dem Sintern verkleben bzw. ein Duroplast in dem hochgraphithaltigen Werkstoff aushärten, womit ein mechanisch widerstandsfähiger formstabiler grüner Preßling ohne metallischen Grundkörper gebildet wird. - Der hochmetallhaltige Werkstoff enthält dabei im wesentlichen Kupfer und/oder Zink, wobei reine Metalle, aber auch Anlegierungen dieser Metalle eingesetzt werden können. Außer Zink können Zusätze von Antimon, Silber und Wismut vorteilhaft sein.

Wenngleich nach diesem Verfahren gute Ergebnisse erzielbar sind, ist der erforderliche Aufwand auf Dauer erheblich, um zu vermeiden, daß sich erhebliche Metallanteile bzw. Metallpartikelmengen bei dem Aufbringen der Schicht aus hochmetallhaltigem Werkstoff auf die Schicht aus Graphitpartikeln mit dieser vermengen, was die Eigenschaften des gesinterten Preßlings negativ beeinflussen kann.

Weiterhin ist es bekannt, eine Graphitscheibe oder einen Graphitblock mit einem galvanischen Überzug aus Kupfer oder Zinn zu versehen, um diesen lötfähig zu gestalten. Hierbei muß jedoch das Risiko ausgeschlossen werden, daß die hochmetallische Schicht nicht fest auf dem Graphit haftet, weshalb das Galvanisierverfahren verhältnismäßig aufwendig ist. Hinzu kommen erforderliche Maßnahmen, um das Verfahren umweltfreundlich zu gestalten, was insbesondere beinhalten kann, daß in die Umgebung zu entlassende Bäder zuvor zu neutralisieren sind.

Der vorliegenden Erfindung liegt daher die Aufgabe zugrunde, ein Verfahren zum metallischen Beschichten von Graphitscheiben oder -blöcken zu schaffen, welches bei Vermeidung der Nachteile bekannter Verfahren eine gute Materialtrennung der Graphitscheibe bzw. des Graphitblocks und der hochmetallischen Schicht - mit Ausnahme einer Grenzschicht zwischen der Graphitschicht und der hochmetallischen Schicht - gewährleistet, wobei die hochmetallische Schicht zuverlässig auf der Graphitschicht haften soll und eine Belastung der Umwelt bei Durchführung dieses Herstellungsverfahrens gering gehalten werden soll.

Diese Aufgabe wird durch ein Verfahren gemäß Anspruch 1 gelöst.

Eine entsprechend metallisch beschichtete Graphitscheibe oder beschichteter Graphitblock zeichnet sich durch die Merkmale nach Anspruch 8 aus.

Bei dem erfindungsgemäßen Verfahren können für die hochmetallische Schicht insbesondere Kupfer und Zinn, auch Legierungen von diesen, eingesetzt werden. Die auf die Graphitscheibe oder den Graphitblock thermisch aufgespritzte Metallschicht haftet auf dieser fest und ist damit unproblematisch lötfähig.

Als in dieser Hinsicht als besonders vorteilhaft hat es sich herausgestellt, daß das Metall durch Plasmaspritzen auf die Graphitscheibe oder den Graphitblock aufgespritzt wird.

Ein solches Plasmaspritzen ist insbesondere in der Medizintechnik zur Herstellung von Prothesenwerkstoffen bekannt, insbesondere um Titan auf den Prothesenwerkstoff aufzuspritzen, zu dem generell Keramiken gehören (http://www.medicoat.ch/ deutsch/plasmaspritzen.html).

Als Plasmaspritzverfahren zum metallischen Beschichten von Graphitscheiben oder -blöcken eignet sich sowohl das atmosphärische Plasmaspritzen als auch - zum Erzielen besonders dichter metallischer Schichten ohne Gaseinschlüsse - das Vakuumplasmaspritzen.

Generell wird das Plasmaspritzen in der Weise durchgeführt, daß zwischen einer stiftförmigen Kathode und einer als Düse geformten Anode ein Lichtbogen gezündet wird, der in die hohle Anode eingeleitetes Plasmagas erhitzt, anregt, dissoziert und ionisiert. Ein pulverförmiges, in dem vorliegenden Anwendungsfall metallisches Spritzmaterial kann dem Plasmastrahl außerhalb der Anode zugeführt werden oder auch innerhalb der Anode, wobei die Partikel in dem Plasmastrahl erhitzt, geschmolzen und auf das Substrat in Form der Graphitscheibe oder des Graphitblocks beschleunigt werden, auf der bzw. auf dem sie sich schichtbildend niederschlagen. Bei der Schichtbildung entsteht eine für thermisch gespritzte Schichten charakteristische lamellare Struktur.

Zur verbesserten Haftung der auf die Oberfläche der Graphitscheibe bzw. des Graphitblocks thermisch aufgespritzten metallischen Schicht kann die Oberfläche gemäß Anspruch 7 zuvor durch Sandstrahlen mit Korund aufgerauht werden. Letztere Maßnahme kann sich auch für andere thermische Spritzverfahren, die alternativ eingesetzt werden, vorteilhaft auswirken.

Als alternatives thermisches Spritzverfahren kann zum Aufspritzen von Metall auf die Graphitscheiben bzw. Graphitblöcke das Flammspritzen, insbesondere Drahtflammspritzen, eingesetzt werden. Dabei wird das flammzuspritzende Metall in einer Flamme oder durch elektrische Heizung geschmolzen und mit Druckluft oder einem Schutzgas zerstäubt, um auf die Graphitscheibe bzw. den Graphitblock schichtbildend aufgestäubt zu werden.

Als weitere Alternative kann die metallische Schicht durch Schmelzen des Metalls oder der Metalle in einem elektrischen Lichtbogen und Zerstäuben in einem Gasstrom erzeugt werden, der die Partikel der zu beschichtenden Oberfläche zuführt.

Die nach den obigen Ansprüchen vorteilhaft hergestellten, metallisch beschichteten Graphitscheiben oder beschichteten Graphitblöcken, bei denen die metallische Beschichtung aus einer thermisch aufgespritzten Schicht besteht, sind in den Ansprüchen 8 - 15 angegeben. Die Vorteile dieser Beschichtung bestehen wiederum in dem zuverlässigen festen Haften der metallischen Schicht an der vorzugsweise aufgerauhten Oberfläche der Graphitscheibe oder des Graphitblocks, der guten Materialtrennung zwischen der metallischen Schicht und dem Grundmaterial der Graphitscheibe oder des Graphitblocks und in dem fertigungsgünstigen Herstellungsverfahren auch unter dem Gesichtspunkt der Umweltschonung.

## Patentansprüche

1. Verfahren zum metallischen Beschichten von Graphitscheiben oder - blöcken, insbesondere Kohlebürsten elektrischer Maschinen, mit wenigstens einem Metall insbesondere aus der Gruppe Kupfer und Zinn,
**dadurch gekennzeichnet,**
**daß** das Metall auf eine Oberfläche der Graphitscheibe oder des Graphitblocks thermisch aufgespritzt wird.

2. Verfahren nach Anspruch 1,
**dadurch gekennzeichnet,**
**daß** das Metall durch Plasmaspritzen aufgespritzt wird.

3. Verfahren nach Anspruch 2,
**dadurch gekennzeichnet,**
**daß** das Metall durch Vakuum-Plasmaspritzen aufgespritzt wird,

4. Verfahren nach Anspruch 1,
**dadurch gekennzeichnet,**
**daß** das Metall durch Flammspritzen aufgespritzt wird.

5. Verfahren nach Anspruch 4,
**dadurch gekennzeichnet,**
**daß** das Metall durch Draht-Flammspritzen aufgespritzt wird.

6. Verfahren nach Anspruch 1,
**dadurch gekennzeichnet,**
**daß** das Metall durch Lichtbogenspritzen aufgespritzt wird.

7. Verfahren nach wenigstens einem der vorangehenden Ansprüche,
**dadurch gekennzeichnet,**
**daß** die Oberfläche der Graphitscheiben bzw. der Graphitblöcke durch Sandstrahlen mit Korund aufgerauht wird, bevor die metallische Schicht aufgespritzt wird.

8. Metallisch beschichtete Graphitscheibe oder beschichteter Graphitblock, insbesondere für eine Kohlebürste elektrischer Maschinen, deren metallische Schicht im wesentlichen aus Kupfer und/oder Zinn besteht,
**gekennzeichnet durch** eine thermisch aufgespritzte Schicht.

9. Metallisch beschichtete Graphitscheibe oder beschichteter Graphitblock nach Anspruch 8 ,
**gekennzeichnet durch** eine **durch** Phasenspritzen aufgespritzte Schicht.

10. Metallisch beschichtete Graphitscheibe oder beschichteter Graphitblock nach Anspruch 9,
**gekennzeichnet durch** eine **durch** Vakuum-Plasmaspritzen aufgebrachte Schicht.

11. Metallisch beschichtete Graphitscheibe oder beschichteter Graphitblock nach Anspruch 8,
**gekennzeichnet durch** eine **durch** Flammspritzen aufgespritzte Schicht.

12. Metallisch beschichtete Graphitscheibe oder beschichteter Graphitblock nach Anspruch 11,
**gekennzeichnet durch** eine **durch** Draht-Flammspritzen aufgespritzte Schicht.

13. Metallisch beschichtete Graphitscheibe oder beschichteter Graphitblock nach Anspruch 8,
**gekennzeichnet durch** eine **durch** Lichtbogenspritzen aufgespritzte Schicht.

14. Metallisch beschichtete Graphitscheibe oder beschichteter Graphitblock nach einem der vorangehenden Ansprüche,
**dadurch gekennzeichnet,**
**daß** die metallische Schicht auf eine aufgerauhte Oberfläche der Graphitscheibe bzw. des Graphitblocks aufgespritzt ist.

15. Metallisch beschichtete Graphitscheibe oder beschichteter Graphitblock insbesondere nach mindestens einem der vorangehenden Ansprüche 8-14,
**gekennzeichnet durch** eine lamellare Struktur der metallischen Schicht.
